# EUROPEAN PATENT APPLICATION

(11) **EP 4 475 398 A1**
(43) Date of publication of application: **11.12.2024**
(21) Application number: 23178028.9
(22) Date of filing: 07.06.2023
(51) Int. Cl.: H02K 1/2791, H02K 1/32, H02K 7/18, H02K 9/08

(54) **ELECTRIC GENERATOR FOR A WIND TURBINE, COMPRISING AN INNER STATOR AND AN OUTER ROTOR, OUTER ROTOR FOR AN ELECTRIC GENERATOR FOR A WIND TURBINE, AND WIND TURBINE WITH AN ELECTRIC GENERATOR**

(71) Applicant: Siemens Gamesa Renewable Energy A/S, 7330 Brande (DK)
(72) Inventor: Nilifard, Reza, 7400 Herning (DK); Bhide, Ravindra, Cambridge, CB5 8BG (GB)
(74) Representative: SGRE-Association

(57) **Abstract**

Electric generator (7) for a wind turbine (1), comprising an inner stator (10) and an outer rotor (11) which is rotatably mounted around a rotation axis (6) which extends along a longitudinal direction (12) of the rotor (11), wherein an air gap (22) is provided between the stator (10) and the rotor (11), wherein the rotor (11) comprises a hollow cylindrical rotor housing (23) and a plurality of magnet means (24) being arranged at an inner surface of the rotor housing (23) in several rows extending along the longitudinal direction (12), wherein the inner surface comprises at least one groove like longitudinal recess (30) extending along the longitudinal direction (12) and being covered by the magnet means (24) of one of the rows, wherein the inner surface comprises at least one groove like circumferential recess (31) extending along the circumferential direction (14) and connecting the longitudinal recess (30) with the air gap (22).

## Description

The present invention relates to an electric generator for a wind turbine, comprising an inner stator and an outer rotor which is rotatably mounted around a rotation axis which extends along a longitudinal direction of the rotor, wherein an air gap is provided between the stator and the rotor, wherein the rotor comprises a hollow cylindrical rotor housing and a plurality of magnet means being arranged at an inner surface of the rotor housing in several rows extending along the longitudinal direction, wherein the inner surface comprises at least one groove like longitudinal recess extending along the longitudinal direction and being covered by the magnet means of one of the rows. Furthermore, the present invention relates to an outer rotor for an electric generator for a wind turbine, comprising a hollow cylindrical rotor housing and a plurality of magnet means being arranged at an inner surface of the rotor housing in several rows extending along the longitudinal direction, wherein the inner surface comprises at least one groove like longitudinal recess extending along the longitudinal direction and being covered by the magnet means of one of the rows. Additionally, the present invention relates to a wind turbine.

A wind turbine typically comprises a hub with several blades, wherein the hub is mounted such that it can rotate around a rotation axis. The wind-driven rotation of the hub is transferred to the rotor of the electric generator. The generator is typically arranged within a nacelle, wherein the nacelle is arranged on top of a tower of the wind turbine. Modern wind turbines can have a total height of tens or hundreds of meters. The output power of the electric generator can be in the range of multi-megawatts, particularly between 1 and 40 megawatts.

Electrical losses occur in the stator and the rotor and cause the need of a cooling of these components. For this purpose, air, particularly ambient air from the vicinity of the wind turbine or air circulating within a cooling circuit, can be guided to the generator, wherein the air gets in thermal contact with the stator and/or rotor and transports heat away from these components.

A specific aspect regarding the cooling of an electric generator for a wind turbine is the dissipation of heat which is caused by electrical losses in permanent magnets, magnet base plates and rotor housings which carry the permanent magnets. Additionally, wind turbines located in regions with hot climatic conditions undergo the problem that the magnet temperature can rise above the safe limit because of high ambient temperatures, which causes negative effects with respect to magnet properties.

EP 4 109 717 A1 discloses an electric generator of a direct drive wind turbine, wherein a cylindrical rotor housing carries several magnet means. The magnet means are located at an inner housing surface and arranged along several rows. The inner housing surface comprises groove like recesses which are covered by the magnet means of one of the rows. Between pairs of magnet means, a gap is provided which extends along the circumferential direction and which communicates with the recess. The gap is open towards an air gap between the rotor and the stator and to the recess such that an air flow from the air gap through the gap into the recess is possible.

EP 2 601 728 B1 discloses an electric machine with a rotor, wherein permanent magnets are arranged of the rotor body. The rotor body comprises a slot or recess which extends along the longitudinal direction of the rotor, wherein the recess causes a reduction of the contact area between the permanent magnets and the rotor body to increase the magnetic holding force of the permanent magnets.

It is an object of the present invention to provide an enhanced concept with respect to an air cooling system which is adapted to cool permanent magnets of an outer rotor of an electric generator for a wind turbine.

To achieve this object, according to the present invention an electric generator as described initially is characterized in that the inner surface comprises at least one groove like circumferential recess extending along the circumferential direction and connecting the longitudinal recess with the air gap.

Regarding the definitions of directions, the direction pointing perpendicular away from the rotation axis can be defined as a radial direction. The direction pointing perpendicular away from the radial direction into the direction a point of the rotor which rotates around the rotation axis can be defined as the circumferential direction.

The invention is based on the idea that the, particularly slot-like, longitudinal recess, which is often used for increasing the magnetic holding force of the permanent magnets, is additionally used for realizing an air channel for cooling the respective magnet module. To realize a sufficient cooling effect, it is advantageous that air can leave or enter the longitudinal recess at a position of the recess which is spaced apart from the facial front sides of the longitudinal recess, because otherwise a heat accumulation occurs at respective positions. Particularly, if air can enter the longitudinal recess only at openings which are located on the front end sides of the longitudinal recess, the resulting cooling effect is typically not sufficient for realizing an adequate cooling. According to the present invention, the respective communication between the longitudinal recess and the air gap is realized by the circumferential recess which constitutes an air flow path from the longitudinal recess to the air gap or vice versa.

In contrast to the system of EP 4 109 717 A1, the respective air flow path is realized by a cooling channel which is constituted by the, particularly slot-like, circumferential recess of the rotor housing. Hence, according to the present invention, between the magnet means, gaps are not necessarily required such that the flexibility of the constructive design of the respective electric generator or rotor, respectively, is improved. Particularly, with respect to the gaps between the magnet means of EP 4 109 717 A1, the circumferential recess can be broader than a possible maximum of the width of the gaps between the magnet means. Hence, the amount of cooling air which is guided through the recesses and, thus, the cooling effect can be increased.

According to the present invention, air which streams through or is present in the air gap can laterally branch off from the air gap into the circumferential recess and from the circumferential recess into the longitudinal recess. Conversely, air which is present below the magnet means in the longitudinal recess can flow into the air gap via the circumferential recess. An air transfer between the air gap and the recesses can be driven by convection and/or by an air pump, being particularly an air fan, which creates an air flow which is guided through the air gap. The air gap can have a width in the order of several millimeters. The longitudinal direction of the circumferential recess can extend perpendicular to the longitudinal direction of the longitudinal recess. According to the present invention, a complex air path system including the air gap, the longitudinal recess and the circumferential recess is realized, such that the air flows along several sides of the magnet means to provide an enhanced cooling effect.

The longitudinal recess and/or the circumferential recess are groove like. In other words, the respective recess can be a slot which is realized by a notch or deepening of the inner surface. The longitudinal recess can extend straightly along a line. The longitudinal recess can extend over the complete longitudinal extension of the rotor. Regarding its longitudinal direction, the shape of the circumferential recess can be circular or arc-shaped. Regarding its cross section, the shape of the circumferential recess can be rectangular, particularly quadratic.

The longitudinal recess is covered by the magnet means of one of the rows. Hence, several magnet means are arranged along a straight line which extends along the longitudinal direction and parallel to the longitudinal extension of the longitudinal recess. At least one lateral wall of the air channel which is constituted by the longitudinal recess can be realized by an outer surface of the rotor housing, i.e., by the outer surface which constitutes the respective groove. Another lateral wall, which is arranged opposed to the lateral wall which is realized by the outer surface of the rotor, is realized by the lower surface of the magnet means which is in contact with the inner surface of the rotor housing. Assuming that the air channel which is realized by the longitudinal recess has a rectangular cross section, three side walls of this channel can be realized by the groove which constitutes the longitudinal recess and one side wall can be realized by the lower surface of the magnet means.

In a possible embodiment of the present invention, several circumferential recesses can be provided along the longitudinal direction of the rotor. The circumferential recesses can be either evenly or unevenly spaced along the longitudinal direction. Most preferably, beneath each of the magnet modules at least one circumferential recess is provided.

The electric generator according to the present invention can be a distributed winding generator or a concentrated winding generator. The stator of the electric generator comprises windings which are wound over stator teeth. In the case of the distributed winding, the respective winding is wound over at least two stator teeth. In the case of the concentrated winding, the respective winding is wound over one stator tooth.

According to the present invention, the circumferential recess or one of the circumferential recesses can be a central recess which is arranged at a longitudinal center of the rotor. The respective circumferential recess can be exactly in the middle of the longitudinal extension of the rotor or slightly offset from this position. In the longitudinal middle of the rotor, the highest temperatures are expected for the magnet modules. Hence, the respective circumferential recess and the resulting enhancement of the cooling effect on this position is advantageous.

In a specific embodiment of the present invention, the circumferential recess or at least one of the circumferential recesses is a connection recess which connects at least two adjacent longitudinal recesses with each other. In this embodiment, the respective circumferential recess communicates with more than one of the longitudinal recesses. Hence, the air which flows through to adjacent longitudinal recesses laterally branches into the same circumferential recess, i.e., into the connection recess from opposites directions. Between the respective longitudinal recesses, particularly in the middle, the connection recess can be open radially outwards to the air gap. Particularly, the circumferential recess or at least one of the circumferential recesses connects more than two, particularly all, longitudinal recesses with each other.

The circumferential recess or at least one of the circumferential recesses can be a non-connection recess which connects the longitudinal recess or one of the longitudinal recesses only with the air gap. In this embodiment, the respective circumferential recess communicates with only one of the longitudinal recesses. The non-connection recess is, on its one end, open towards the respective longitudinal recess and, on its other end, towards the air gap. The opening of the non-connection recess can be located, particularly in the middle, between two adjacent longitudinal recesses.

According to the present invention, several groups of connection recesses and/or non-connection recesses can be provided, wherein the circumferential recesses of each of the groups extend along a common circumferential line, wherein the circumferential lines of the groups are arranged along the longitudinal direction, wherein the circumferential recesses of two adjacent groups are alternating. In this embodiment, a labyrinth-like air path system is realized.

In a possible embodiment of the present invention, at least one of the magnet means comprises a permanent magnet being located on a base plate, wherein the base plate is attached to the rotor housing for arranging this magnet means on the inner surface. The base plate, which can consist of a metal, constitutes the connection interface between the permanent magnet of the respective magnet means and the inner surface or rotor housing. The base plate is located or arranged between the respective permanent magnet and the inner surface. The permanent magnet is attached to the base plate, particularly by a gluing connection or the like.

The shape of the permanent magnet can be prismatic or cuboidal. The shape of the base plate can be a rectangular, wherein the sides of the base plates of adjacent magnet means within one row which comprise the same length, particularly the smaller length of the side of the respective rectangle, can be located next to each other, having either a gap between each other or being in contact with each other.

At least one of the magnet means, particularly the or a base plate of this magnet means, comprises a T-shaped attachment section, wherein the rotor housing comprises a T-shaped slot on the inner surface, wherein the attachment section is inserted in the slot to attach the magnet means on the rotor housing. In this embodiment, the magnet means, particularly the base plate, comprises two laterally protruding tongues which extend from the main body of the base plate into the circumferential direction. The T-shaped attachment section can be realized by the base plate. The shape of the T-shaped slot corresponds to the shape of the attachment section, particularly such that a form fit between the attachment section and the slot is realized for attaching the magnet means to the inner surface. For attaching the magnet means to the inner surface, the magnet means can be inserted into the slot along the longitudinal direction and via an opening of the slot on its front end face. The longitudinal recess can extend along the bottom surface of the slot.

The T-shape of the attachment section and/or of the slot can be interrupted in the area of the circumferential recess or of at least one of the circumferential recesses. In this embodiment, the opening of the respective circumferential recess which leads into the air gap is enlarged compared with the case where the T-shape is not interrupted. The interruption of the T-shape can be present at a location spaced apart from the longitudinal end, particularly in the longitudinal middle, of the respective magnet means or base plate. This ensures that the respective magnet means is sufficiently and securely held via the respective T-shapes at its longitudinal ends.

In a preferred embodiment, at least two of the rows are spaced from each other with respect to the circumferential direction. The opening of the circumferential recess leading into the air gap can be arranged in the space between the respective rows. Particularly, the rows are evenly distributed with respect to the circumferential direction.

Adjacent magnet means of at least one of the rows can be in contact with each other. This contact particularly ensures that an air tightness of the longitudinal recess which is arranged below this row is realized, particularly without the need of separate sealants. Alternatively, however, a gap can be provided between the magnet means to create openings of the longitudinal recess towards the air gap.

According to a possible embodiment, several circumferential recesses having different cross-sectional areas are provided. The cross-sectional areas can be rectangular and have a specific width and height, wherein the cross sectional area results as the multiplicative product of these extents. The circumferential recess or one of the circumferential recesses being arranged at a longitudinal center of the rotor can comprise a larger cross-sectional area than the circumferential recess(es) arranged at a longitudinal outer section of the rotor. The concrete choice of cross-sectional areas depend on the specific cooling requirements and can be adapted as desired.

The present invention is furthermore related to an outer rotor as initially described, wherein the inner surface comprises at least one groove like circumferential recess extending along the circumferential direction, wherein the at least one circumferential recess, regarding a state of the rotor being mounted in the electric generator, connects the longitudinal recess with an air gap which is provided between an inner stator of the electric generator the and the rotor. All aspects, features and advantages which are described with respect to the electric generator according to the present invention can be transferred to the outer rotor according to the present invention and vice versa.

Additionally, the present invention is related to a wind turbine, comprising an electric generator according to the description above. The wind turbine can be a direct drive wind turbine. In this embodiment, the rotational frequency of the rotor of the generator is equivalent to the rotational frequency of the hub, because the hub is connected directly to the generator, i.e., without having a gearbox in between. All aspects, features and advantages which are described with respect to the electric generator according to the present invention and/or with respect to the outer rotor according to the present invention can be transferred to the wind turbine according to the present invention and vice versa.

The wind turbine according to the present invention can be characterized by an air cooling system being a cooling circuit or an open system and comprising at least one air pump, being particularly an air fan, wherein the air pump is adapted to pump cooling air to the air gap and/or the longitudinal recess. The air pump can be a ventilator or fan, respectively. If the air cooling system is a cooling circuit, the cooling circuit can realize a thermodynamic cooling cycle. If the air cooling system is an open system, ambient air can be sucked from the vicinity of the wind turbine, particularly by an inlet opening of the wind turbine or the nacelle, respectively. After the air has passed the rotor, it can be expelled into the vicinity again, particularly by an outlet opening of the wind turbine or the nacelle, respectively.

Regarding the air cooling system, the longitudinal channel or at least one of the longitudinal channels can be open on at least one of the lateral ends of the rotor, particularly on both lateral ends. If the longitudinal channel or at least one of the longitudinal channels is open on both lateral ends, an air feeding chamber can be provided on each of the two axial face ends of the rotor, wherein the air feeding chambers communicate with the air gap and the respective longitudinal channel. The air pump can be adapted to pump cooling air into the air feeding chambers, such that the cooling air is then guided into the air gap and into the longitudinal recess such that it enters the circumferential recess as well. Hence, a part of the cooling air enters the air gap and another part of the cooling air enters the longitudinal recess(es). Concretely, air enters the air gap and the longitudinal recess(es) from both axial sides such that the air flows into opposite directions. Regarding the longitudinal recess(es), the air can leave the longitudinal recess(es), particularly at a central region, through the circumferential recess(es) into the air gap. Regarding the air gap, the air can leave the air gap, particularly at a central region, through at least one radial air channel of the stator. The radial air channel can be realized by gaps between laminated metal sheets which constitute the stator. The radial air channel is connected with the air gap on its one lateral end and with an air discharging chamber on its other end. The air discharging chamber can be connected with the air feeding chamber if the closed cooling system is provided or with the vicinity of the wind turbine if the open cooling system is provided.

In an alternative embodiment, one air feeding chamber can be provided axially on the face end of the rotor and one air discharging chamber can be provided axially on the face end of the rotor being arranged oppositely with respect to the air feeding chamber, wherein the air gap and the longitudinal recess(es) communicate with the air feeding chamber and the air discharging chamber. In contrast to the embodiment described in the previous section, the air in the air gap and in the longitudinal recess(es) flows into one direction, i.e., into the direction leading from the air feeding chamber to the air discharging chamber. The air leaves and enters the air gap and the longitudinal recess(es) through its axial ends. The longitudinal recess or at least one of the longitudinal recesses can be closed at its longitudinal end faces such that air can enter the respective longitudinal recess only via the air gap and the circumferential recess. In this embodiment, the air feeding chamber and/or the air discharging chamber directly communicates with the air gap and not with the channels.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a view of a wind turbine according to an embodiment of the present invention, comprising an electric generator according to an embodiment of the present invention, wherein the electric generator comprises an outer rotor according to an embodiment of the present invention,
- Fig. 2: a longitudinal cut through the electric generator of the wind turbine of fig. 1,
- Fig. 3: the same view on the electric generator as fig. 2, wherein a first possible variation of a cooling system of the wind turbine is shown,
- Fig. 4: the same view on the electric generator as fig. 2, wherein a second possible variation of a cooling system of the wind turbine is shown,
- Fig. 5: a radial cut through the electric generator of the wind turbine of fig. 1, wherein the electric generator corresponds to a first embodiment of the present invention,
- Fig. 6: a longitudinal cut through the rotor of the electric generator of fig. 5, wherein the cutting line is indicated by VI - VI in fig. 5,
- Fig. 7: a longitudinal cut through the electric generator of fig. 5, wherein the cutting line is indicated by VII - VII in fig. 3,
- Fig. 8: a radial cut through the electric generator of fig. 5, wherein the cutting line is indicated by VIII-VIII in fig. 6,
- Fig. 9-11: the same view as fig. 6, wherein possible variations of the first embodiment of the electric generator are shown,
- Fig. 12: the same view as fig. 8, wherein the electric generator corresponds to a second embodiment of the present invention, and
- Fig. 13-20: the same view as fig. 6, wherein possible variations of the second embodiment of the electric generator are shown.

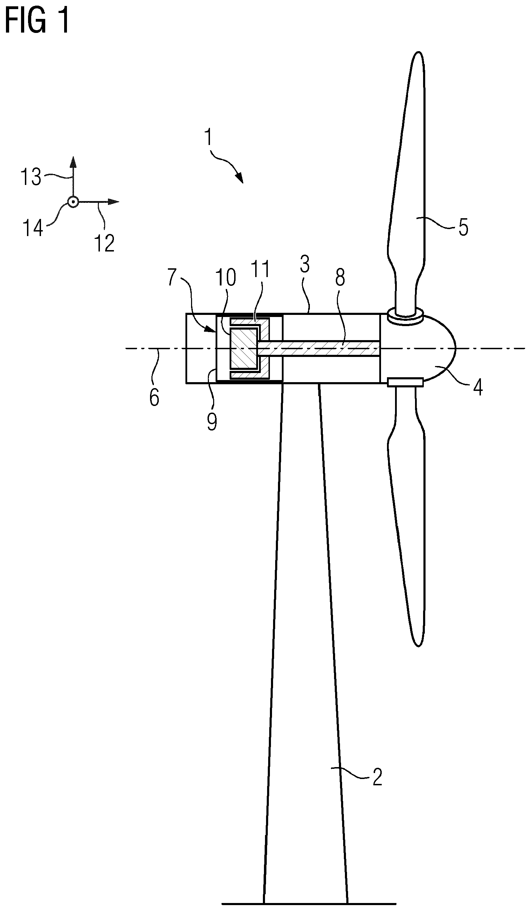

Fig. 1 shows a wind turbine 1 according to an embodiment of the present invention. The wind turbine 1 comprises a tower 2 on which a nacelle 3 is arranged. On the front of the nacelle 3, a hub 4 with several, particularly three, blades 5 is provided. The hub 4 is mounted such that it can rotate about a rotation axis 6. The wind-driven rotation of the hub 4 is transferred to an electric generator 7 according to an embodiment of the present invention which is located in the nacelle 3. The rotation of the hub 4 is transferred to the electric generator 7 by a main shaft 8 which extends along the rotation axis 6. Alternatively, the hub 4 and the electric generator 7 are connected directly, i.e., without having the main shaft 8 in between. Hence, the rotational frequency of the hub 4 can equal the rotational frequency of the electric generator 7. The rotation axis 6 defines a longitudinal direction 12 of the wind turbine 1 and the generator 7. The rotation axis 6 is arranged horizontally but can be also tilted with respect to the horizontal direction. While the total height of the wind turbine 1 is in the order of tens or hundreds of meters, the output power of the wind turbine 1 which is generated by the generator 7 can be in the range of multi-megawatts, particularly between 1 and 40 megawatts. The wind turbine 1 is a direct drive wind turbine. The electric generator 7 is a concentrated or distributed winding generator.

The electric generator 7 comprises an inner stator 10 and an outer rotor 11 being a component according to an embodiment of the present invention. The stator 10 and the rotor 11 are arranged within a housing 9 of the generator 7. While the stator 10 is non-rotatably mounted, a shaft (not shown in the figures) of the rotor 11 is connected with the main shaft 8 such that the rotation of the hub 4 is transferred to the rotor 11. Hence, the rotor 11 can rotate about the rotation axis 6. An air gap 22 having a width of several millimeters is provided between the stator 10 and the rotor 11.

Next, certain directions regarding the wind turbine 1 or the electric generator 7 or the rotor 11, respectively, will be defined. The longitudinal direction 12 extends along or parallel to the direction of the rotation axis 6. The direction pointing perpendicular away from the rotation axis 6 is defined as a radial direction 13. The direction pointing perpendicular away from the radial direction 13 into the direction a point of the rotor 11 which rotates about the rotation axis 6 is defined as a circumferential direction 14.

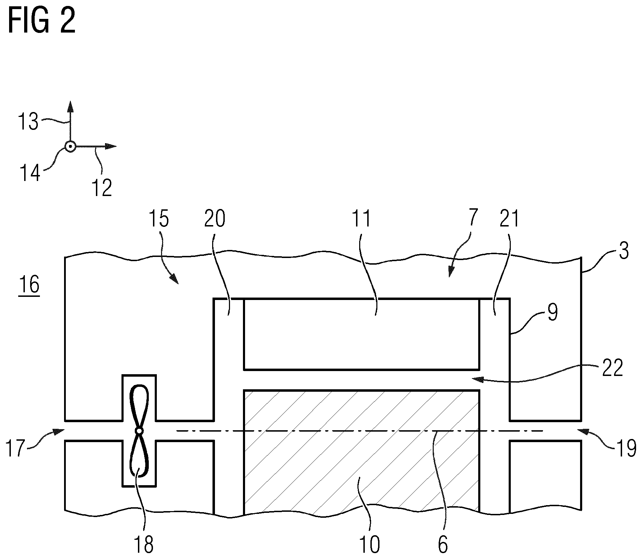

Next, it is referred to fig. 2 which shows a longitudinal cut through the electric generator 7. The wind turbine 1 comprises an air cooling system 15 which is an open system, wherein air from the vicinity 16 of the wind turbine 1 is sucked through an inlet opening 17 of the nacelle 3 by an air pump 18 being a ventilator or an air fan, respectively. The air is guided to the electric generator 7 to cool the stator 10 and the rotor 11. Before the air streams through the rotor 11 and the air gap 22, the air enters an air feeding chamber 20 which is located on a lateral end of the rotor 11 and within the housing 9. Details regarding the air path through the rotor 11 and the air gap 22 will be described below. After the air has passed the rotor 11 and the air gap 22, the air is guided into an air discharging chamber 21 which is located within the housing 9 and on the lateral end of the rotor 11 which is arranged oppositely with respect to the air feeding chamber 20. After passing the air discharging chamber 21, the cooling air is expelled into the vicinity 16 via an outlet opening 19 of the nacelle 3. Instead of the open system, the air cooling system 15 can be a cooling circuit, particularly realizing a thermodynamic cooling cycle.

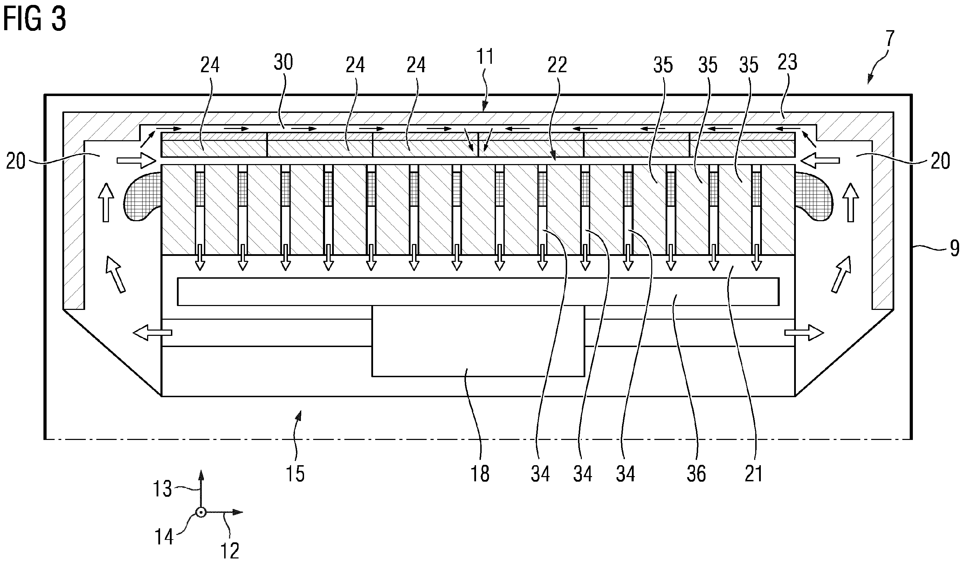

Next, it is referred to fig. 3 which shows same view on the electric generator 7 as fig. 2, wherein a first possible and preferred variation of a cooling system 15 of the wind turbine 1 is shown. According to this embodiment, the air cooling system 15 is a closed system and constitutes a cooling cycle which is driven by the air pump 18 being an air fan. The air cools the stator 10 and the rotor 11, wherein the air flow path is indicated by arrows in fig. 3. Assuming the air pump 18 as the starting point, the air enters two air feeding chambers 20 which are located oppositely on the lateral ends of the rotor 11 and within the housing 9. Then, the air streams through the rotor 11 and the air gap 22. Concretely a part of the air enters the air gap 22 and another part of the cooling air enters longitudinal recesses 30 of the rotor 11 which will be described below in more detail. The air enters the air gap 22 and the longitudinal recesses 33 from both axial sides, i.e., from the non-drive end and from the drive end, such that the air flows into opposite directions. Regarding the longitudinal recesses 30, the air leaves the longitudinal recesses 30 at a central region through circumferential recesses 31 into the air gap 22. Details regarding the circumferential recesses 31 will also be described below in more detail. Regarding the air gap 22, the air can leave the air gap 22 at a central region radial air channels 34 of the stator 10. The radial air channels 34 are realized by gaps between laminated metal sheets 35 which constitute the stator 10. The radial air channels 34 are connected with the air gap 22 on their one lateral ends and with the air discharging chamber 21 on its other end. The air discharging chamber 21 is connected with the air feeding chamber 20. A heat exchanger 36 is provided within the air discharging chamber 21 to cool the air.

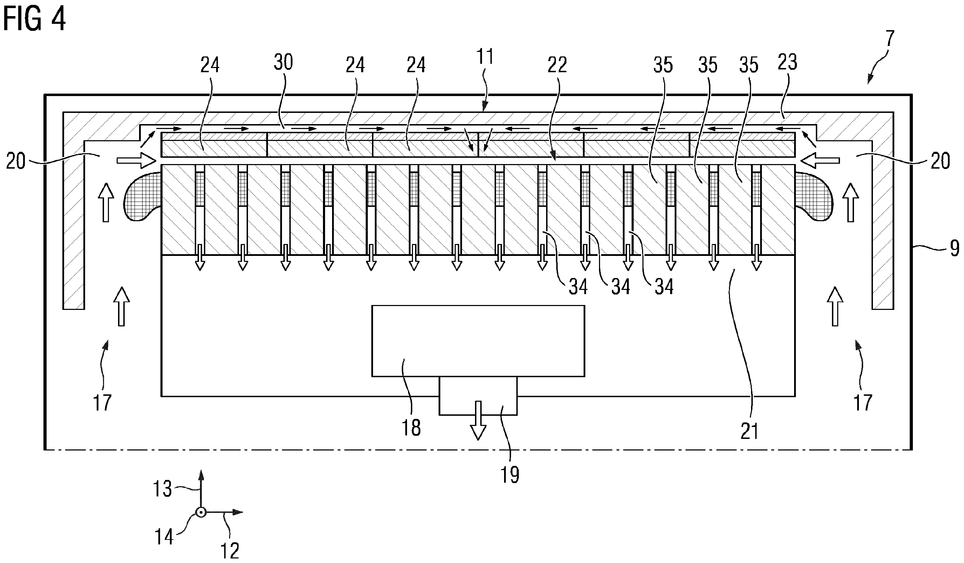

Next, it is referred to fig. 4 which shows same view on the electric generator 7 as figures 2 and 3, wherein a second possible and preferred variation of a cooling system 15 of the wind turbine 1 is shown. The system shown in fig. 4 is basically identical with system shown in fig. 3, apart from the aspect that the cooling system 15 shown in fig. 4 is an open system. Particularly, each of the air inlet chambers 20 is connected with one inlet opening 17, wherein each of the inlet openings 17 leads from the interior of the nacelle 3 or from the vicinity 16 to the respective air inlet chamber 20. Then, starting from the respective air inlet chamber 20, the air streams through the rotor 11 and the air gap 22 as it has been described with respect to the system of fig. 3. After the air has reached the air discharging chamber 21, it is guided through the outlet opening 19 back into the interior of the nacelle 3 or into the vicinity 16. The respective air flow is driven by the air pump 18 being arranged in or on the air discharging chamber 21.

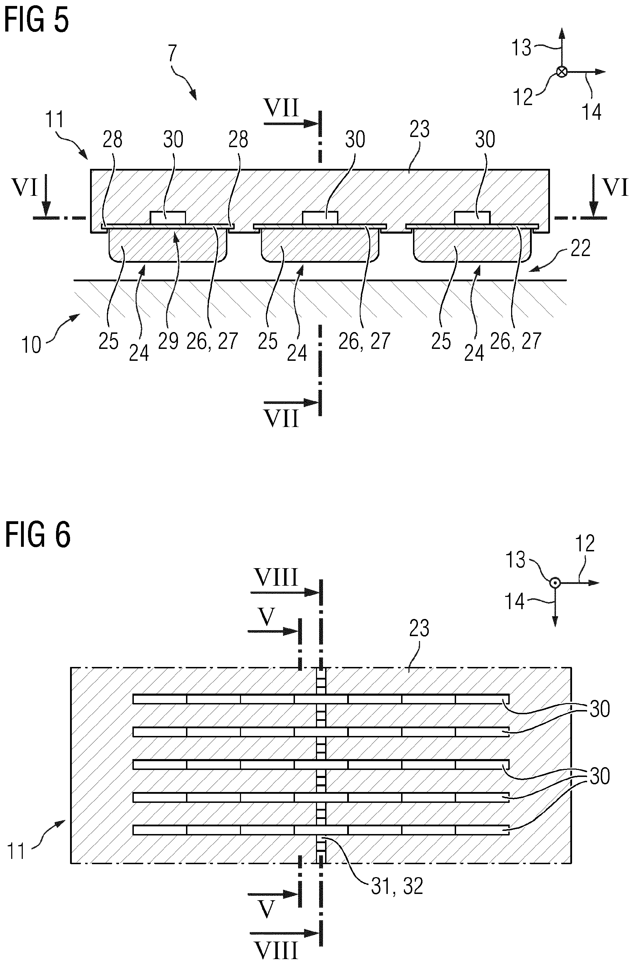

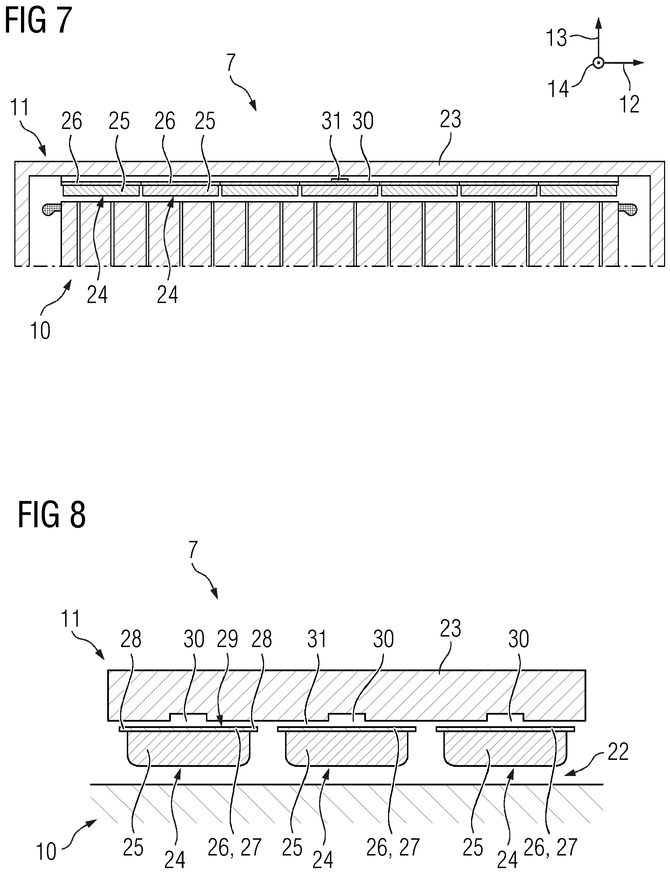

Next, it is referred to figures 5 to 8 which show the electric generator 7 of the wind turbine 1 of fig. 1, according to a first embodiment. Fig. 5 shows a radial cut through the electric generator 7. Each of the figures 6 and 7 show a longitudinal cut through the stator 11, wherein the respective cutting lines are indicated by VI - VI and VII - VII in fig. 5. Figure 7 shows, like fig. 5, a radial cut through the electric generator 7, wherein the respective cutting lines are indicated by V - V and VIII - VIII in fig. 6.

Referring to fig. 5, the rotor 11 comprises a hollow cylindrical rotor housing 23, wherein a plurality of magnet means 24 are arranged on an inner surface of the rotor housing 23. The magnet means 24 are arranged in several rows extending along the longitudinal direction 12, wherein the rows are spaced apart from each other and distributed evenly with respect to the circumferential direction 14. Each of the magnet means 24 comprises a permanent magnet 25 which is attached to a base plate 26, wherein the base plate 26 is attached to the inner surface of the rotor housing 23 for attaching the respective magnetic means 24 on the inner surface. The shape of each of the permanent magnets 25 is prismatic or cuboidal. The shape of each of the base plates 26 is rectangular, wherein the sides of the base plates 26 of adjacent magnet means 24 within one row which comprise the smaller length are in contact with each other.

For connecting the magnet means 24 on the inner surface of the rotor housing 23, each of the base plates 26 comprises or constitutes a T-shaped attachment section 27. Lateral flanges of the respective T-shape are realized by lateral tongues 28 which extend outwards along the circumferential direction 14. The attachment section 27 of each of the magnet means 24 is inserted in one of several T-shaped slots 29 which are arranged on the inner surface of the rotor housing 23. Between each of the attachment sections and the respective slot 29, a form fit is constituted. The longitudinal direction of each of the attachment sections 27 and of each of the slots 29, each having the T-shaped cross-section, extends along the longitudinal direction 12.

Particularly referring to figures 5 and 6, the inner surface of the rotor housing 23 comprises several groove like longitudinal recesses 30 which extend along the longitudinal direction 12. I.e., a longitudinal direction of the respective longitudinal recess 30 is parallel to the longitudinal direction 12 and the rotation axis 6. Each of the longitudinal recesses 30 is arranged on the bottom surface of one of the slots 29.

Next, it is referred to fig. 6. As it becomes apparent from this figure, the inner surface of the rotor housing 32 furthermore comprises a groove like circumferential recess 31 which extends along the circumferential direction 14. Particularly from fig. 8, which shows a cut through the circumferential recess 31, it can be seen that the circumferential recess 31 connects all longitudinal recesses 30 with the air gap 22. Hence, cooling air which flows from the air feeding chambers 20 into the longitudinal channels 30 branches into the circumferential recess 31 in the axial middle of the rotor 11 and subsequently to the air gap 22 to improve the cooling effect for the magnet means 24.

Referring to fig. 6 again, it becomes apparent that the circumferential recess 31 is arranged at a longitudinal center of the rotor 11. Although the circumferential recess 31 is exactly in the middle of the longitudinal extension of the rotor 11, it can be also slightly offset from this position. Since in the longitudinal middle of the rotor 11, the highest temperatures for the magnet modules 24 are expected, the present position of the circumferential recess 31 is advantageous.

The circumferential recess 31 is a connection recess 32 which connects at least two adjacent longitudinal recesses 30. In the present embodiment, the connection recess 32 extends over the complete circumferential line of the inner surface of the rotor body 23 such that all longitudinal recesses 30 are connected by the connection recess 32.

It becomes apparent from fig. 8 that the T-shape of each of the slots 29 is interrupted in the area of the respective circumferential recess 31 to increase the width of the opening of the circumferential recess 31 leading into the air gap 22. The T-shape of the attachment section 27 can be also interrupted in this area. For this, the tongues 28 can be only provided at longitudinal end sections of the respective magnet means 24.

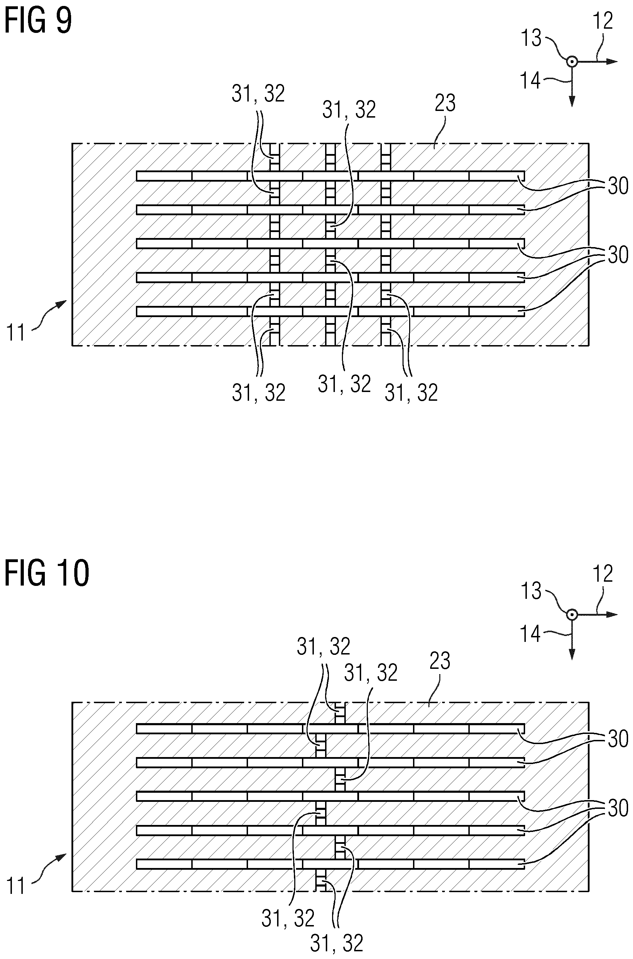

Next, it is referred to fig. 9 which shows the same cut through the rotor body 23 as fig. 6, wherein a first possible variation of the electric generator 7 according to the first embodiment is shown. According to this variation, several, namely three, circumferential recesses are provided. Hence, this variation differs from the variation of fig. 6 by the feature that two additional circumferential recesses 31 are provided, which are arranged adjacently with respect to the circumferential recess 31 of fig. 6. In figures 6 and 9, the positions were to adjacent magnet modules 24 of one of the rows are in contact with each other are indicated by lines in the longitudinal recesses 30. According to the embodiment of fig. 6, one circumferential recess 31 is provided in the region of the magnet module 24 which is arranged in the center of the respective row. According to the embodiment of fig. 9, one circumferential recess 31 is provided in the region of each of the three magnet modules 24 which are arranged in the center of the respective row.

Next, it is referred to fig. 10 which shows the same cut through the rotor body 23 as fig. 6, wherein a second possible variation of the electric machine 7 according to the first embodiment is shown. According to this variation, several circumferential recesses 31 are provided in the region of the magnet modules 24 which are arranged in the center of the respective row. The circumferential recesses 31 according to this variation constitute connection recesses 32 which pairwise connects to adjacent longitudinal recesses 30 with each other. Concretely, two groups of connection recesses 31 are provided, wherein the circumferential recesses 31 of each of the groups extend along a common circumferential line. These circumferential lines are arranged in the longitudinal center of the rotor 11. The circumferential lines have the same distance to a central circumferential line. The circumferential recesses 31 of the two groups are alternating regarding their longitudinal position.

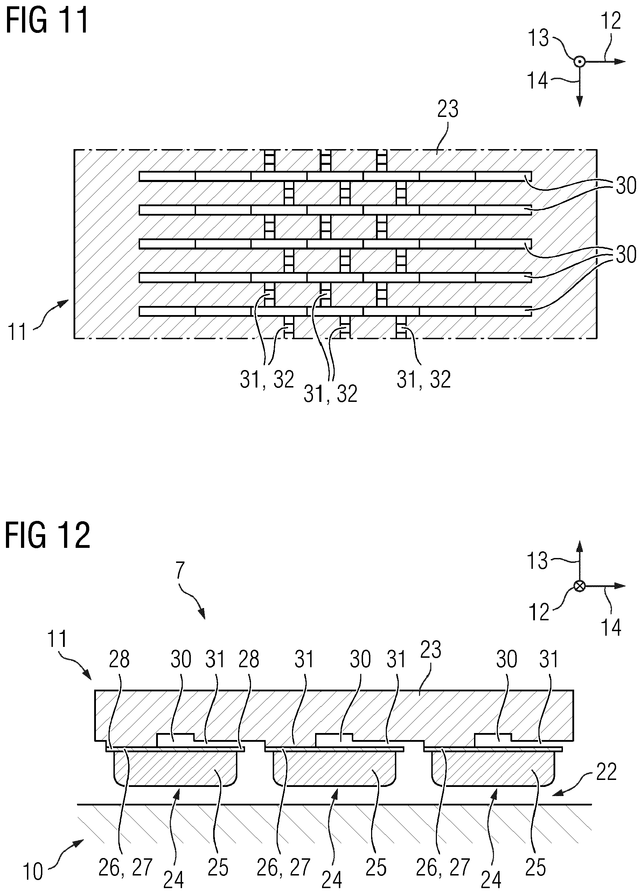

Fig. 11 shows a third possible variation of the electric generator 7 according to the first embodiment. This variation is similar to the variation of fig. 10, wherein there is the difference that, additionally to the two groups of connection recesses 31, two further groups on each lateral side are provided. Hence, six groups of connection recesses 31 are provided, wherein the circumferential recesses 31 of each of the groups extend along a common circumferential line. The circumferential recesses 31 of two adjacent groups are alternating regarding their longitudinal position.

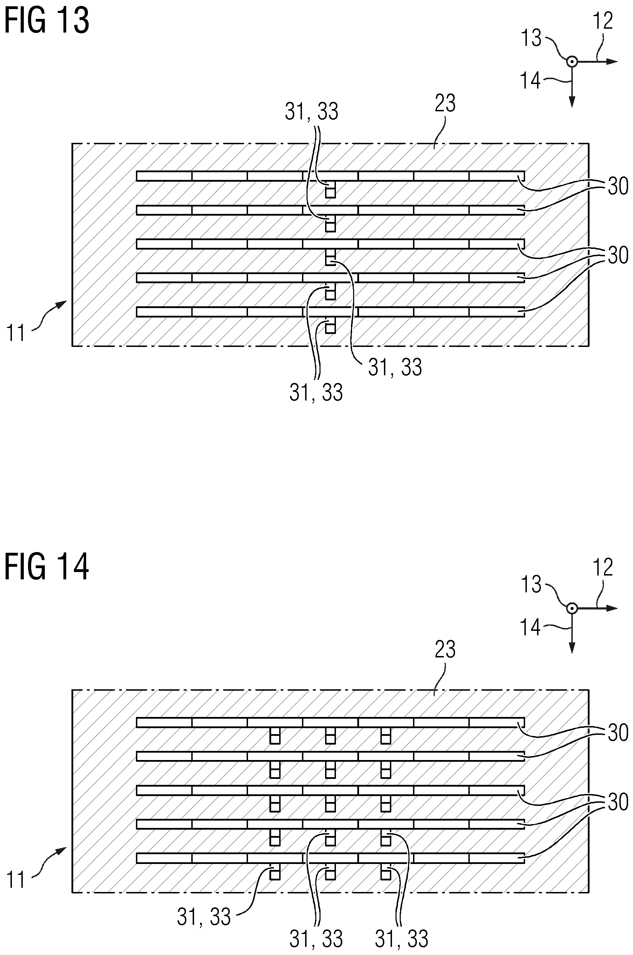

Next, it is referred to figures 12 and 13 which show the electric generator 7 of the wind turbine 1 of fig. 1, according to a second embodiment. Figures 12 and 13 show the same cross-sectional views of the electric generator 7 as figures 8 and 6. The second embodiment differs from the first embodiment by the aspect that instead of one circumferential recess 31 being the connection recess 32, several circumferential recesses 31, each being a non-connection recess 33, are provided. The non-connection recesses 33 are arranged collinearly along the central circumferential line. In contrast to the connection recess 32, each of the non-connection recesses 33 connects one of the longitudinal recesses 30 only with the air gap 22, i.e., with no other longitudinal recess 30.

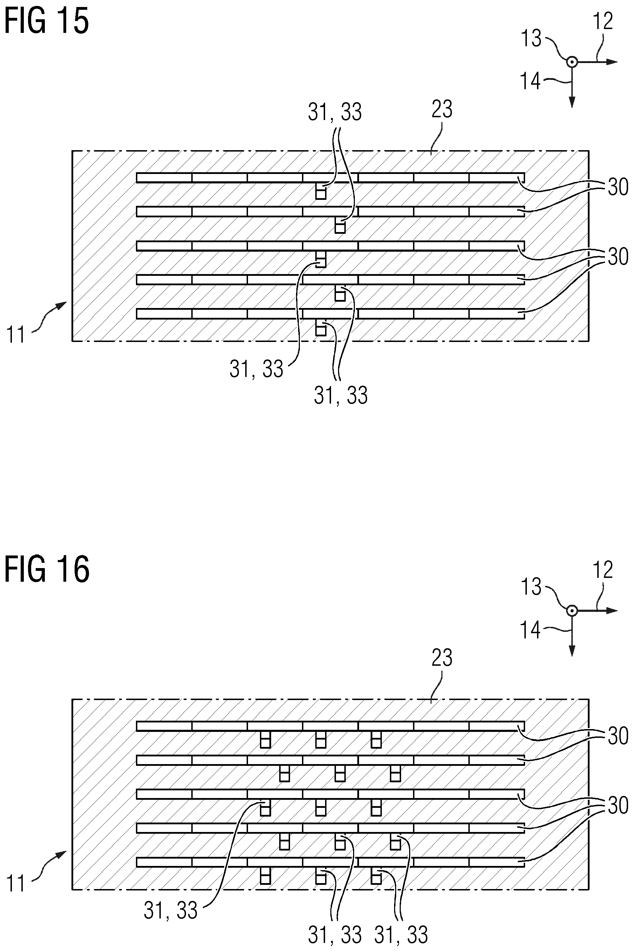

Figures 14, 15 and 16 show a first, a second and a third variation of the electric generator 7 according to the second embodiment. These variations correspond to the first, the second and the third variation of the electric generator 7 according to the first embodiment. I.e, the variation shown in fig. 14 correspond to the variation shown in fig. 9, the variation shown in fig. 15 correspond to the variation shown in fig. 10 and the variation shown in fig. 16 correspond to the variation shown in fig. 11. The difference between the respective variations is that instead of circumferential recesses 31 being connection recesses 32, circumferential recesses 31 being non-connection recesses 33 are provided.

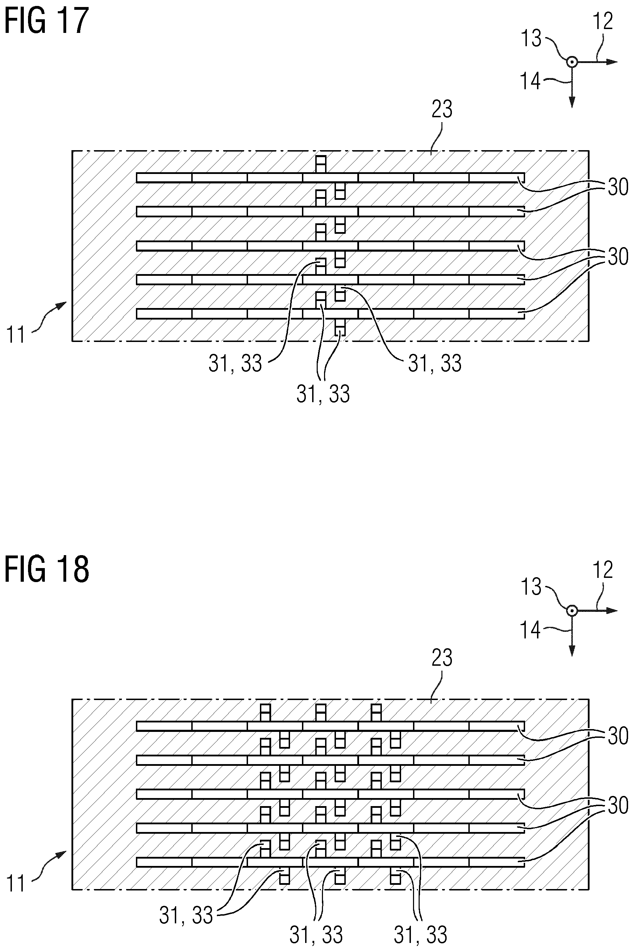

Figures 17 to 20 show further variations of the electric generator 7 according to the second embodiment. The variation shown in fig. 17 corresponds to the embodiment shown in fig. 13. According to fig. 13, the circumferential recesses 31 are central recesses which are arranged at a longitudinal center of the rotor 11. Fig. 17 shows that a group of circumferential recesses 31 can be provided, wherein this group is arranged at a longitudinal center of the rotor 11. Concretely, there are two circumferential recesses 31 provided per longitudinal recess 30, wherein the circumferential recesses 31 being non-connection recesses 33 are arranged laterally opposed on both sides of the respective longitudinal recess 30 with a longitudinal offset.

The variation shown in fig. 18 corresponds to the embodiment of fig. 17, wherein the same group of circumferential recesses 31 is provided as a central group. Additionally to the central group, two further groups which are equal to the central group are provided, namely, referring to the longitudinal direction 12, one further group before and one further group after the central group.

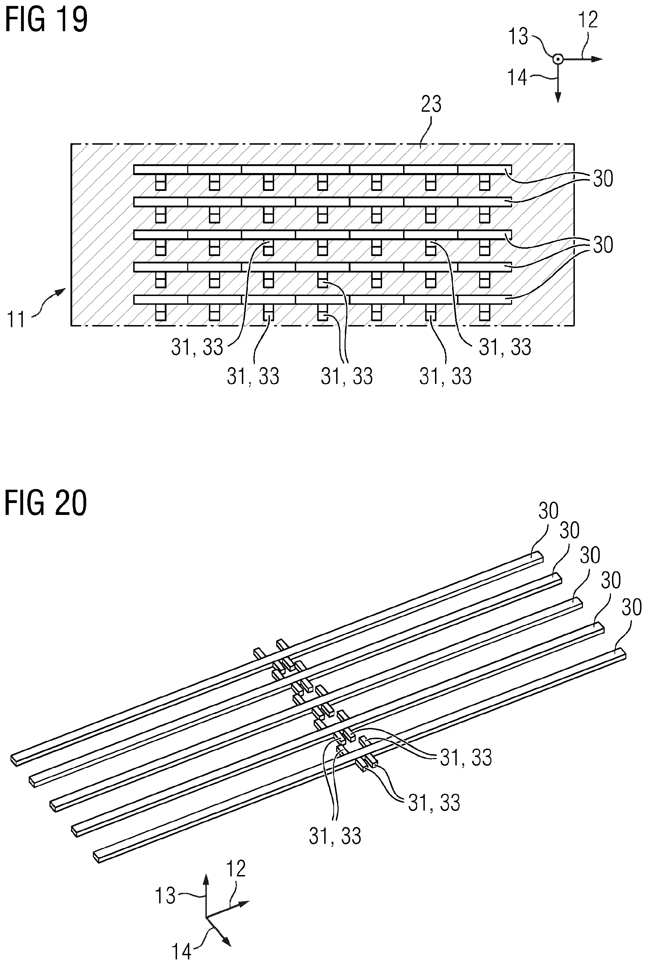

The variation shown in fig. 19 corresponds to the embodiment of fig. 13. The embodiment of fig. 13 comprises a central group of circumferential recesses 31, being particularly non-connection recesses 33. Additionally to the central group, six further groups which are equal to the central group are provided, namely, referring to the longitudinal direction 12, three further groups before and three further groups after the central group.

Next, an optional aspect of the present invention is explained with the help of the embodiment of fig. 19. According to this aspect, several circumferential recesses 31 having different cross-sectional areas are provided. The cross-sectional areas are rectangular and have a specific width which extends along the longitudinal direction 12 and height which extends along the radial direction 13. The circumferential recesses 31 being arranged at the longitudinal center of the rotor 11 comprise a larger cross-sectional area than the circumferential recesses 31. Concretely, the further away the respective circumferential recesses 31 is from the longitudinal center, the smaller is its cross-sectional area such that the greatest amount of air streams through the circumferential recesses 31 being arranged at the longitudinal center, since there the largest cooling efficiency is typically required.

Fig. 20 shows the same view as figures 13 to 19 apart from the aspect that fig. 20 is a three-dimensional view of the recesses 30, 31, wherein the other parts of the rotor 11 are skipped. The variation shown in fig. 20 corresponds to the embodiment of fig. 17. While for the embodiment of fig. 17, two circumferential recesses 31 are provided per longitudinal recess 30 which are arrange laterally opposed on both sides of the respective longitudinal recess 30 with a longitudinal offset, according to the embodiment of fig. 20, two circumferential pairs of recesses 31 are provided per longitudinal recess 30 which are arranged laterally opposed on both sides of the respective longitudinal recess 30 with a longitudinal offset. Although this is not shown in fig. 20, seven magnet modules 24 are provided per row along the longitudinal direction 12, wherein the circumferential recesses 31 are arranged in the axial or longitudinal middle of the rotor 11, i.e., beneath the central magnet modules 24 of the respective row.

The plurality of embodiments shows that, regarding the recesses 30, 31, the designer is free to distribute circumferential recesses 31 according to the specific requirements. There can be an even or uneven distribution of the circumferential recesses 31 regarding the longitudinal direction 12. Additionally, beneath each, particularly central, magnet module 24 one or several circumferential recess 31 can be provided.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Electric generator for a wind turbine (1), comprising an inner stator (10) and an outer rotor (11) which is rotatably mounted around a rotation axis (6) which extends along a longitudinal direction (12) of the rotor (11), wherein an air gap (22) is provided between the stator (10) and the rotor (11), wherein the rotor (11) comprises a hollow cylindrical rotor housing (23) and a plurality of magnet means (24) being arranged at an inner surface of the rotor housing (23) in several rows extending along the longitudinal direction (12), wherein the inner surface comprises at least one groove like longitudinal recess (30) extending along the longitudinal direction (12) and being covered by the magnet means (24) of one of the rows, **characterized in that** the inner surface comprises at least one groove like circumferential recess (31) extending along the circumferential direction (14) and connecting the longitudinal recess (30) with the air gap (22).

2. Electric generator according to claim 1, **characterized in that** the circumferential recess (31) or one of the circumferential recesses (31) is a central recess which is arranged at a longitudinal center of the rotor (11).

3. Electric generator according to claim 1 or 2, **characterized in that** the circumferential recess (31) or at least one of the circumferential recesses (31) is a connection recess (32) which connects at least two adjacent longitudinal recesses (30) with each other.

4. Electric generator according to one of the preceding claims, **characterized in that** the circumferential recess (31) or at least one of the circumferential recesses (31) is a non-connection recess (33) which connects the longitudinal recess (30) or one of the longitudinal recesses (30) only with the air gap (22).

5. Electric generator according to claim 3 or 4, **characterized in that** several groups of connection recesses (32) and/or non-connection recesses (33) are provided, wherein the circumferential recesses (31) of each of the groups extend along a common circumferential line, wherein the circumferential lines of the groups are arranged along the longitudinal direction (12), wherein the circumferential recesses (31) of two adjacent groups are alternating.

6. Electric generator according to one of the preceding claims, **characterized in that** at least one of the magnet means (24) comprises a permanent magnet (25) being located on a base plate (26), wherein the base plate (26) is attached to the rotor housing (23) for arranging this magnet means (24) on the inner surface.

7. Electric generator according to one of the preceding claims, **characterized in that** at least one of the magnet means (24), particularly the or a base plate (26) of this magnet means (24), comprises a T-shaped attachment section (27), wherein the rotor housing (23) comprises a T-shaped slot (29) on the inner surface, wherein the attachment section (27) is inserted in the slot (29) to attach the magnet means (24) on the rotor housing (23).

8. Electric generator according to claim 7, **characterized in that** the T-shape of the attachment section (27) and/or of the slot (29) is interrupted in the area of the circumferential recess (31) or of at least one of the circumferential recesses (31) .

9. Electric generator according to one of the preceding claims, **characterized in that** at least two of the rows are spaced from each other with respect to the circumferential direction (14).

10. Electric generator according to claim 9, **characterized in that** the rows are evenly distributed with respect to the circumferential direction (14).

11. Electric generator according to one of the preceding claims, **characterized in that** adjacent magnet means (24) of at least one of the rows are in contact with each other.

12. Electric generator according to one of the preceding claims, **characterized in that** several circumferential recesses (31) having different cross-sectional areas are provided.

13. Outer rotor for an electric generator (7) for a wind turbine (1), comprising a hollow cylindrical rotor housing (23) and a plurality of magnet means (24) being arranged at an inner surface of the rotor housing (23) in several rows extending along the longitudinal direction (12), wherein the inner surface comprises at least one groove like longitudinal recess (30) extending along the longitudinal direction (12) and being covered by the magnet means (24) of one of the rows, **characterized in that** the inner surface comprises at least one groove like circumferential recess (31) extending along the circumferential direction (14), wherein the at least one circumferential recess (31), regarding a state of the rotor (11) being mounted in the electric generator (7), connects the longitudinal recess (30) with an air gap (22) which is provided between an inner stator (10) of the electric generator (7) the and the rotor (11).

14. Wind turbine, comprising an electric generator (7) according to one of the claims 1 to 12.

15. Wind turbine according to claim 14, **characterized by** an air cooling system (15) being a cooling circuit or an open system and comprising at least one air pump (18), wherein the air pump (18) is adapted to pump cooling air to the air gap (22) and/or the longitudinal recess (30).
